(19) Europäisches Patentamt

European Patent Office

Office européen des brevets

(11) **EP 0 915 323 B1**

(12) **FASCICULE DE BREVET EUROPEEN**

(45) Date de publication et mention
de la délivrance du brevet:
**31.03.2004 Bulletin 2004/14**

(51) Int Cl.⁷: **G01C 19/56**

(21) Numéro de dépôt: **98402754.0**

(22) Date de dépôt: **05.11.1998**

(54) **Microgyromètre vibrant**

Mikromechanischer Schwingkreisel

Micromechanical vibrating gyroscope

(84) Etats contractants désignés:
**DE GB IT**

(30) Priorité: **07.11.1997 FR 9714041**

(43) Date de publication de la demande:
**12.05.1999 Bulletin 1999/19**

(73) Titulaire: **COMMISSARIAT A L'ENERGIE
ATOMIQUE
75015 Paris (FR)**

(72) Inventeur: **Charvet, Pierre-Louis
38950 Saint Martin le Vinoux (FR)**

(74) Mandataire: **Poulin, Gérard
Société BREVATOME
3, rue du Docteur Lancereaux
75008 Paris (FR)**

(56) Documents cités:
**EP-A- 0 778 458      DE-A- 4 428 405**

## Description

### Domaine technique

La présente invention concerne un microgyromètre vibrant. Elle concerne en particulier un microgyromètre micro-usiné sur silicium.

### Etat de la technique

Les accéléromètres en silicium et en quartz sont aujourd'hui sur le marché des capteurs et des actionneurs. Ils ont démontré que les structures micrométriques sont bien qualifiées pour les demandes actuelles du fait de leur bas coût et leurs petites dimensions. Cependant, ces capteurs inertiels ne suffisent pas à la navigation et il est aujourd'hui nécessaire de développer de petits capteurs pour mesurer, voire pour informer sur la vitesse angulaire d'un mobile quel qu'il soit. Ces capteurs portent le nom de gyromètres.

Dans le domaine de l'information sur une vitesse de rotation, on connaît les gyroscopes basés sur le principe de la conservation du moment cinétique d'une toupie suspendue à la cardan qui sont souvent des merveilles de précision mais dont le coût, de ce fait très élevé, ne permet pas leur intégration dans la multitude des applications dans lesquelles ils paraissent souhaitables.

D'autres gyroscopes, dits gyrolasers, existent. Ces appareils font appel aux propriétés de l'optique cohérente et ne comportent aucune pièce mécanique mobile.

Il existe cependant une demande pour des gyromètres mécaniques, de classe de précision plus faible et de coût plus bas que les gyromètres précédents. Les gyromètres vibrants répondent bien à ces conditions.

Le principe de leur fonctionnement est issu de la composition des accélérations d'un solide lié à un repère mobile par rapport à un repère galiléen (ou du moins un repère que l'on peut considérer comme fixe pour la durée de l'expérience), d'où découle la force de Coriolis. Ce principe s'adapte bien aux microstructures en silicium ou en quartz et la technologie mise en oeuvre pour leur réalisation s'apparente à celle utilisée pour la réalisation des micro-accéléromètres. Les gyromètres utilisant ce principe sont nombreux et dépendent bien souvent du type de détection employée.

Quelle qu'en soit la géométrie, ces appareils sont des oscillateurs mécaniques à deux degrés de liberté orthogonaux entre eux, mais aussi à l'axe de rotation de la vitesse angulaire à mesurer ou sur laquelle on désire une information. En outre, ces deux degrés de liberté doivent être assujettis à la même fréquence propre, voire la même fréquence de résonance, ce qui est d'ailleurs une contrainte importante.

Ces appareils utilisent pour base à leur développement l'expression vectorielle de la force de Coriolis :

$$\vec{F}_{Coriolis} = 2 \cdot m \cdot \vec{\Omega} \wedge \vec{V}_{relative} \qquad [1]$$

avec :

m = masse sismique liée au mobile par l'intermédiaire d'équipages élastiques,
$\vec{\Omega}$ = représentation vectorielle de la vitesse angulaire du mobile,
$V_{relative}$ = représentation vectorielle de la vitesse de la masse m par rapport au mobile.

Il apparaît que la force $\vec{F}_{Coriolis}$ est orthogonale aux deux vitesses $\vec{\Omega}$ et $\vec{V}_{relative}$, et n'existe que si ces dernières ne sont pas colinéaires. Ainsi, pour générer un signal proportionnel à $\vec{\Omega}$, il suffit d'animer une masse en suspension selon une direction non colinéaire à $\vec{\Omega}$ d'une vitesse $\vec{V}_{relative}$ et de mesurer, selon la direction orthogonale à ces deux vitesses, le signal qui en découle. Il est important de noter que le meilleur signal sera obtenu pour $\vec{V}_{relative}$ perpendiculaire à $\vec{\Omega}$. Ce signal dépend bien sûr de la grandeur physique que l'on veut mesurer en sortie. Bon nombre de concepteurs ont choisi de s'informer sur la vitesse de rotation $\vec{\Omega}$ par le rapport d'amplitudes suivant :

$$\frac{A_{SORTIE}}{A_{ENTREE}} = \frac{\Omega}{\pi \cdot f_0} \cdot \left[ \left( 1 - p^2 \right)^2 + \left( \frac{p}{Q} \right)^2 \right]^{-\frac{1}{2}} \qquad [2]$$

avec :

$\Omega$ = vitesse de rotation,

Q = facteur de qualité mécanique,

$f_0$ = fréquence propre des deux directions,

$p = \dfrac{f}{f_0}$ = rapport fréquence d'excitation/fréquence propre.

Ce rapport d'amplitudes correspond à celui d'un oscillateur à deux degrés de liberté dont l'un des degrés est excité par une force extérieure. Le meilleur rapport est obtenu en excitant à la fréquence de résonance $f_r$ :

$$\frac{A_{SORTIE}}{A_{ENTREE}} = R = \frac{\Omega \cdot Q}{\pi \cdot f_r} \qquad [3]$$

L'optimisation de ce signal revient à améliorer le facteur de qualité et à minimiser la fréquence de résonance.

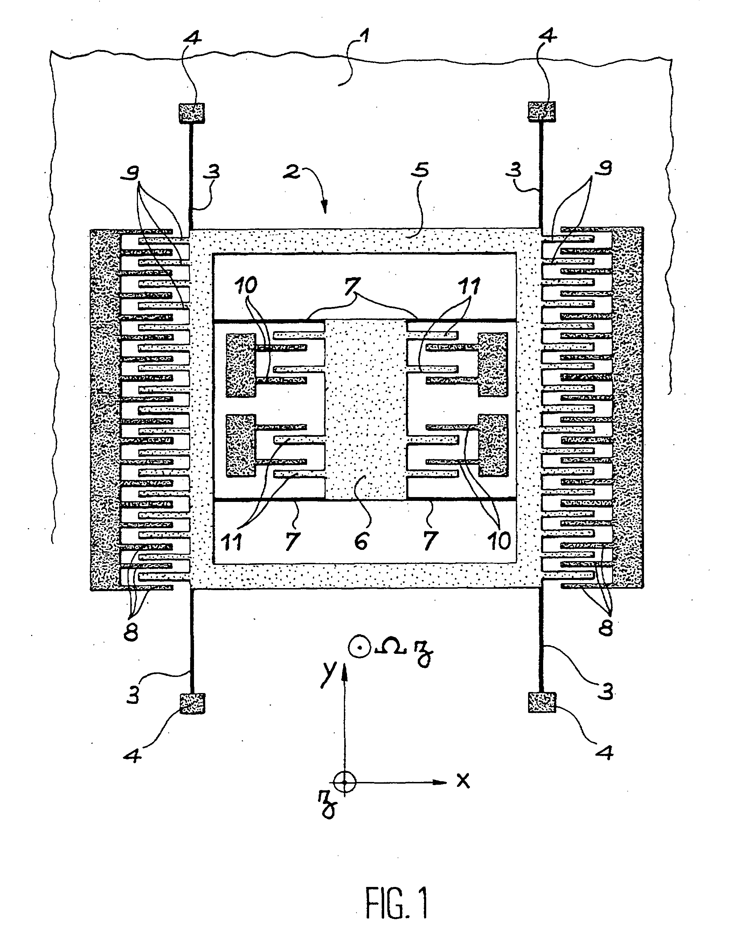

De nombreuses publications divulguent des microgyromètres vibrants basés sur la méthode énoncée ci-dessus. Ces microgyromètres vibrants sont toujours des structures à deux degrés de liberté dont une voie est astreinte à une vitesse par l'intermédiaire d'une force extérieure d'excitation, et dont l'autre voie, excitée par la force de Coriolis, est destinée à la détection. La figure 1 est une vue de dessus d'un microgyromètre vibrant de l'art connu et obtenu par micro-usinage. Le microgyromètre a été élaboré à partir d'un substrat 1. Il comporte un équipage mobile 2 disposé au-dessus et parallèlement au substrat 1. L'équipage mobile 2 est maintenu au-dessus du substrat 1 par des poutres 3 parallèles au plan du substrat et liées à ce substrat par des points d'ancrage 4. L'équipage mobile 2 et les poutres 3, dont la direction est parallèle à l'axe y, ont été obtenus après élimination d'une couche sacrificielle recouvrant le substrat. Les poutres 3 sont rattachées aux angles d'un cadre rectangulaire 5 de l'équipage mobile qui supporte à son tour et en son centre une partie rectangulaire 6 dite oscillateur secondaire. L'oscillateur secondaire est relié au cadre 5 par des poutres 7 dont la direction est parallèle à l'axe x. L'équipage mobile 2, comprenant le cadre 5 et l'oscillateur secondaire 6, se trouve donc dans un plan parallèle au plan d'axes x, y et perpendiculaire à l'axe z.

Ce microgyromètre comporte des moyens d'excitation capacitifs grâce à des électrodes agencées sous forme de peignes interdigités. Le substrat 1 supporte des électrodes fixes d'excitation 8 tandis que le cadre 2 supporte des électrodes mobiles d'excitation 9. Le microgyromètre comporte également des moyens de détection capacitifs grâce à des électrodes agencées sous forme de peignes interdigités. Le substrat 1 supporte des électrodes fixes de détection 10 tandis que l'oscillateur secondaire supporte des électrodes mobiles de détection 11.

Le microgyromètre de la figure 1 constitue un oscillateur à deux degrés de liberté dont une voie (la voie $\vec{x}$) est excitée par une force électrostatique à variation de surface. L'autre voie (la voie $\vec{y}$) est destinée à la détection électrostatique (mesure de capacité) par variation d'entrefer. L'ensemble est soumis à la vitesse de rotation $\Omega$ autour de l'axe $\vec{z}$.

Ce type de microgyromètre possède les inconvénients suivants. Ils fournissent un très faible signal pour de petites vitesses de rotation. Le rapport exprimé par la relation [3] est inversement proportionnel à la fréquence, ce qui est pénalisant. La réponse de l'appareil n'est pas instantanée du fait du régime transitoire de vibrations.

**Exposé de l'invention**

Afin de remédier à ces inconvénients, la présente invention propose un microgyromètre vibrant basé sur les considérations suivantes.

La force de Coriolis découle en fait de la composition des accélérations d'un solide lié à un repère mobile par rapport à un repère galiléen (ou considéré comme tel du fait de la durée de l'expérience). Si l'on prend comme point de départ la force de Coriolis [1] interagissant sur un oscillateur à deux degrés de liberté orthogonaux entre eux et aussi à l'axe de la vitesse de rotation à mesurer ou sur laquelle on désire une information, rien n'empêche d'animer la masse mobile de vitesses selon les deux voies constituées par les deux degrés de liberté, ce qui revient à donner deux composantes à la vitesse relative. Soient $V_x$ et $V_y$, ces deux composantes respectivement selon les axes $\vec{x}$ et $\vec{y}$. On suppose le repère mobile par rapport au repère fixe animé d'une vitesse de rotation $\Omega$ autour de l'axe $\vec{z}$. La force de Coriolis aura donc deux composantes $F_{x\,coriolis} = -2 \cdot m \cdot \Omega \cdot V_y$ selon la voie $\vec{x}$ et $F_{y\,Coriolis} = 2 \cdot m \cdot \Omega \cdot V_x$ selon la voie $\vec{y}$. De ce fait, l'amplitude selon la voie $\vec{x}$ se verra opposer une force qui tendra à la réduire, celle de la voie $\vec{y}$, au contraire, s'en trouvera augmentée.

Si l'on excite chacune des deux voies $\vec{x}$ et $\vec{y}$ par une force extérieure d'excitation et que l'on mesure l'amplitude résultante sur chacune des voies (l'appareil étant soumis à une vitesse de rotation), le rapport d'amplitudes $R = \dfrac{voie\,\vec{x}}{voie\,\vec{y}}$ peut se mettre sous la forme :

$$R' = \left[\frac{16 \cdot \pi^2 \cdot f^2 \cdot \Omega^2 \cdot Q^2 - 32 \cdot \pi^3 \cdot f^3 \cdot \Omega \cdot Q + 16 \cdot \pi^4 \cdot f^4 + \Omega^4 \cdot Q^2}{16 \cdot \pi^2 \cdot f^2 \cdot \Omega^2 \cdot Q^2 + 32 \cdot \pi^3 \cdot f^3 \cdot \Omega \cdot Q + 16 \cdot \pi^4 \cdot f^4 + \Omega^4 \cdot Q^2}\right]^{1/2}$$

avec :

f = fréquence propre et fréquence de résonance des voies $\vec{x}$ et $\vec{y}$,

Q = facteur de qualité mécanique,

$\Omega$ = vitesse de rotation à mesurer.

Pour que le facteur Q soit important, il est nécessaire de travailler dans un vide poussé.

Il apparaît que, pour une même vitesse de rotation faible, le signal détecté pour un appareil à deux voies excitées, comme le propose l'invention, possède une valeur qui est environ le double de celle fournie par les gyromètres vibrants de l'art connu. En outre, l'oscillateur évoluant en régime permanent, il répond instantanément à la sollicitation (une vitesse de rotation), ce qui est un avantage certain.

L'invention a donc pour objet un microgyromètre vibrant comportant une masse sismique disposée au-dessus d'une surface d'un substrat et rattachée à cette surface par des moyens élastiques agencés pour permettre à la masse sismique de se déplacer par rapport au substrat selon deux directions orthogonales entre elles et orthogonales à l'axe de mesure du microgyromètre, des moyens d'excitation de la masse sismique pour la mettre en vibration, et des moyens de détection de la force de Coriolis s'exerçant sur la masse sismique, caractérisé en ce que les moyens d'excitation permettent d'exciter la masse sismique dans lesdites deux directions orthogonales entre elles et en ce que les moyens de détection permettent de détecter les composantes de la force de Coriolis également dans lesdites deux directions orthogonales entre elles.

Avantageusement, les moyens d'excitation peuvent être des moyens d'excitation électrostatiques et les moyens de détection peuvent être des moyens de détection capacitifs.

Avantageusement, les moyens élastiques sont conçus de sorte à présenter des raideurs mécaniques identiques dans lesdites deux directions orthogonales entre elles.

La masse sismique et les moyens élastiques peuvent être définis par des évidements réalisés dans une plaque disposée parallèlement à ladite surface du substrat et au-dessus de cette surface. Ces moyens élastiques peuvent être des lames flexibles.

Les moyens d'excitation peuvent comprendre des condensateurs d'excitation électrostatique, chaque condensateur comprenant une électrode solidaire du substrat et un moyen formant électrode solidaire de la masse sismique. Les moyens de détection peuvent comprendre des condensateurs, chaque condensateur comprenant une électrode solidaire du substrat et un moyen formant électrode solidaire de la masse sismique. Le moyen formant électrode peut être constitué par le matériau de la masse sismique si ce matériau est un matériau conducteur. Des électrodes solidaires du substrat peuvent être réparties dans les évidements.

Avantageusement, il est prévu des écrans électrostatiques pour que chaque électrode solidaire du substrat forme un condensateur avec uniquement un moyen formant électrode solidaire de la masse sismique et situé en vis-à-vis.

La masse sismique peut être rattachée au substrat par des points d'ancrage situés à l'extérieur de la surface occupée par la masse sismique. Elle peut aussi être rattachée au substrat par un point d'ancrage situé au centre de la surface occupée par la masse sismique.

Le microgyromètre selon l'invention peut être élaboré à partir d'un substrat semiconducteur, par exemple à partir d'un substrat en silicium.

**Brève description des figures**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1, déjà discutée, est une vue de dessus d'un microgyromètre vibrant selon l'art connu,
- la figure 2 représente une première variante, en vue de dessus, d'un microgyromètre selon la présente invention,
- la figure 3 représente une seconde variante en vue de dessus, d'un microgyromètre selon la présente invention,
- la figure 4 est une vue en coupe selon l'axe IV-IV de la figure 3.

## Description détaillée de modes de réalisation de l'invention

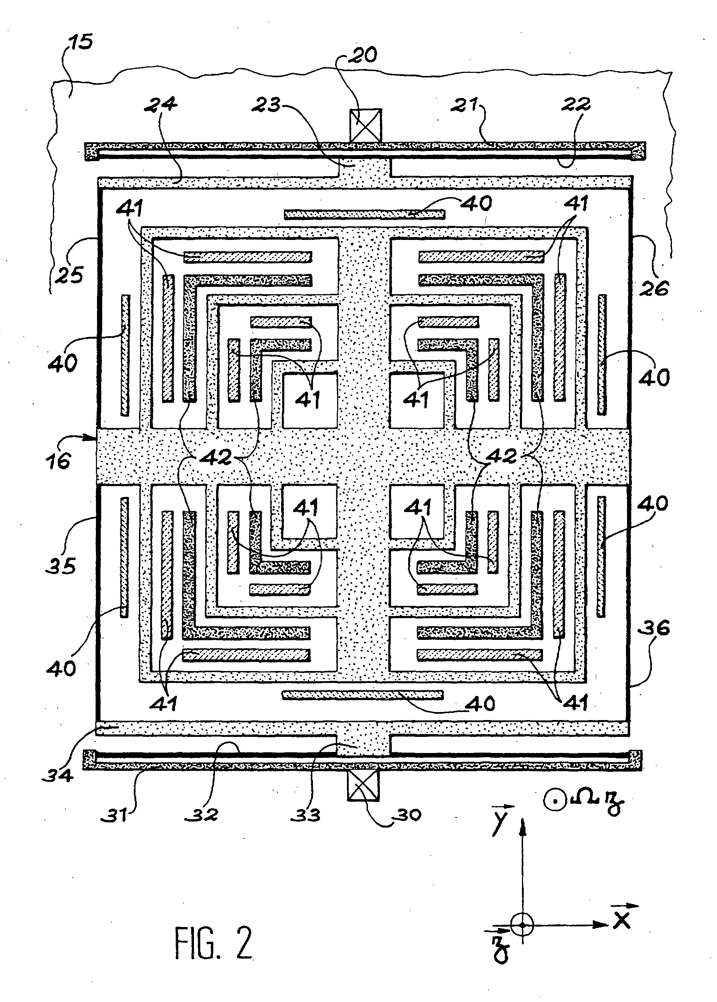

Une première variante de microgyromètre selon la présente invention est représentée, en vue de dessus, à la figure 2. Ce microgyromètre est micro-usiné dans une couche de silicium monocristallin dopée n par exemple. Cette couche de silicium monocristallin sur isolant est obtenue par scellement direct (ou "Wafer Bonding" dans la terminologie anglo-saxonne). Cette technique, communément appelée scellement direct (SDB), est décrite dans de nombreuses publications parmi lesquelles on peut citer l'article "Silicon-to-Silicon Direct Bonding Method" de M. SHIMBO et al., paru dans la revue J. Appl. Phys., Vol. 60 (8), du 15 octobre 1986. Il est possible d'utiliser d'autres techniques d'obtention d'une couche de silicium sur isolant, par exemple par implantation d'oxygène dans une plaque de silicium ou simplement par dépôt d'une couche de silicium monocristallin ou polycristallin sur une couche sacrificielle.

Ce microgyromètre comprend une masse sismique 16 suspendue au-dessus de la face supérieure du substrat 15 et maintenue parallèlement à cette face par deux points d'ancrage 20 et 30. Les points d'ancrage 20 et 30 maintiennent en fait une structure gravée dans la couche de silicium monocristallin. Après élimination de la couche sacrificielle séparant la couche de silicium monocristallin du substrat support, la couche de silicium monocristallin ou plaque a été gravée pour donner la structure représentée à la figure 2.

Chaque point d'ancrage 20, 30, supporte une poutre, respectivement 21 et 31, en son centre. Chaque poutre 21, 31 sous-tend, entre ses extrémités, une lame flexible formant ressort respectivement 22, 32. Les lames flexibles 22 et 32 sont parallèles à la direction $\vec{x}$. La lame flexible 22 soutient en son centre, par l'intermédiaire d'une partie transversale 23, une poutre 24 parallèle à la poutre 21. De même, la lame flexible 32 soutient en son centre, par l'intermédiaire d'une partie transversale 33, une poutre 34 parallèle à la poutre 31.

La masse sismique 16 est maintenue aux extrémités des poutres 24 et 34 par quatre lames flexibles : les lames 25 et 26 reliées aux extrémités de la poutre 24, et les lames 35 et 36 reliées aux extrémités de la poutre 34. Ces lames flexibles 25, 26, 35 et 36 sont parallèles à la direction $\vec{y}$. Leur flexibilité s'exerce dans la direction $\vec{x}$ tandis que les lames 22 et 32 sont flexibles dans la direction $\vec{y}$. Ainsi, la masse sismique 16 peut se déplacer dans toutes les directions normales à la perpendiculaire à la face supérieure du substrat 15, c'est-à-dire dans toutes les directions normales à la direction $\vec{z}$.

Les équipages élastiques constitués par ces lames flexibles sont conçus de telle sorte que les raideurs mécaniques qui leur sont associées attribuent aux directions $\vec{x}$ et $\vec{y}$ la même fréquence propre dans la mesure du possible.

Dans cet exemple de réalisation, la masse sismique 16 présente la forme une croix dont chaque branche est reliée à la branche adjacente par une série de parties coudées. Chaque espace entre deux parties coudées successives constitue un évidement.

Lors de la gravure du microgyromètre, on a laissé subsister des éléments solidaires du substrat 15. Ce sont d'abord des électrodes d'excitation 40 réparties en périphérie de la masse sismique 16. Chaque électrode 40 se trouve en vis-à-vis d'une partie correspondante de la masse sismique 16 en silicium monocristallin dopé, donc en matériau électriquement conducteur, qui constitue une autre électrode de condensateur. Ces électrodes 40 de condensateurs d'excitation sont également réparties selon les directions $\vec{x}$ et $\vec{y}$.

On trouve ensuite d'autres électrodes 41 dites électrodes de détection. Elles sont disposées dans les évidements de la masse sismique 16. Comme pour les électrodes d'excitation 40, chaque électrode 41 se trouve en vis-à-vis d'une partie correspondante de la masse sismique 16 en silicium monocristallin qui constitue une autre électrode de condensateur. Les électrodes 41 sont également réparties selon les directions $\vec{x}$ et $\vec{y}$. Elles sont destinées à la mesure, à chaque instant, des amplitudes selon les voies $\vec{x}$ et $\vec{y}$ permettant de remonter à l'information qu'est la vitesse de rotation autour de la direction $\vec{z}$.

Les électrodes 40 et 41 sont séparées du substrat 15 par une couche d'isolant, par exemple par une couche de silice. Elles peuvent être réalisées en silicium monocristallin dopé.

Le microgyromètre comporte aussi des écrans électrostatiques 42, par exemple en silicium monocristallin et directement supportés par le substrat 15. Ces écrans électrostatiques 42 sont répartis en fonction de la distribution des électrodes de détection 41 pour que chaque électrode 41 ne forme qu'un seul condensateur avec une partie de la masse sismique 16 en regard. De ce fait, les électrodes 40 et 41 n'ont, chacune, qu'une seule direction d'influence.

Les électrodes d'excitation 40 permettent d'appliquer un signal d'excitation selon les voies $\vec{x}$ et $\vec{y}$. Les électrodes de détection 41 permettent de recueillir un signal également selon les voies $\vec{x}$ et $\vec{y}$ pour le transmettre à un analyseur qui fournira des informations sur la vitesse de rotation autour de l'axe $\vec{z}$ d'un corps équipé du microgyromètre. Il est souhaitable d'asservir le microgyromètre en amplitude, ce qui permet de ne pas modifier les caractéristiques mécaniques en fonction de la vitesse de rotation. De ce fait, ce sera la connaissance des potentiels électrostatiques appliqués sur les électrodes d'excitation qui renseigneront sur cette vitesse.

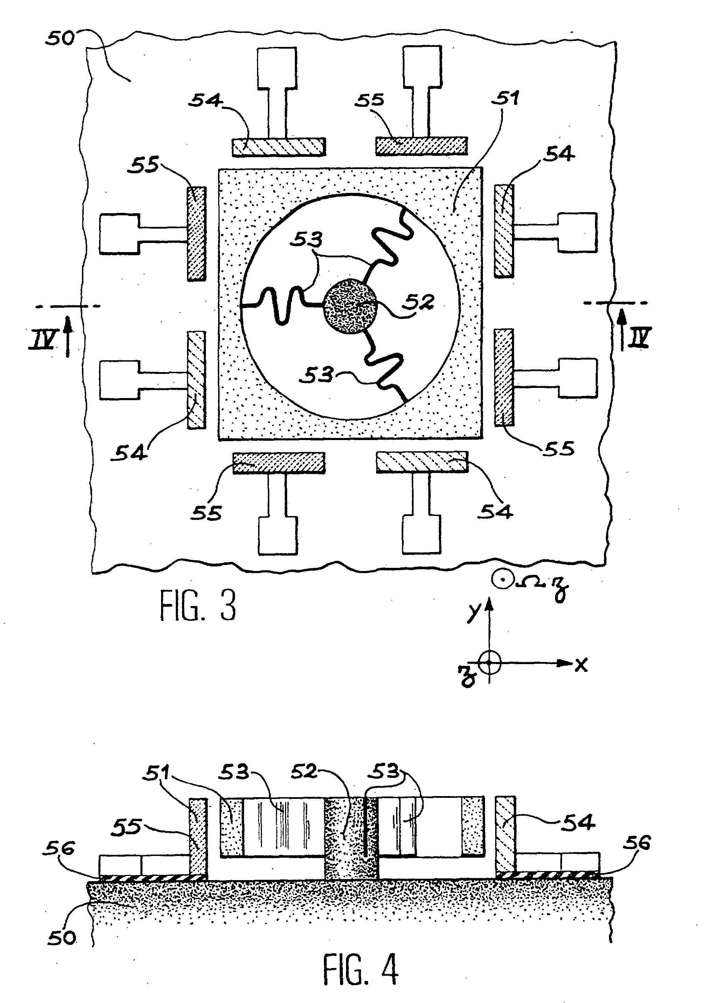

Une seconde variante de microgyromètre selon la présente invention est illustrée par les figures 3 et 4, la figure 3 étant une vue de dessus et la figure 4 une vue de côté en coupe. Ce microgyromètre est micro-usiné sur un substrat de silicium 50 dopé n par exemple. Il comprend une masse sismique 51 suspendue au-dessus de la face supérieure du substrat 50, et parallèlement à cette face, par un point d'ancrage central 52 grâce à des équipages élastiques 53. Comme pour la première variante, la structure vibrante peut être gravée dans une plaque obtenue par dépôt d'une couche de silicium monocristallin dopé n sur une couche sacrificielle déposée au préalable sur la face supérieure du substrat.

Les équipages élastiques 53 sont des lames flexibles gravées en même temps que la masse sismique 51. Elles sont distribuées de façon que l'excitation de la masse sismique se fasse de manière uniforme dans toutes les directions du plan défini par les axes $\vec{x}$ et $\vec{y}$.

La gravure a laissé subsister d'autres éléments solidaires du substrat 50 : des électrodes d'excitation 54 et des électrodes de détection 55. Ces électrodes sont réparties autour de la masse sismique et de manière alternée. Chaque électrode 54 ou 55 se trouve en vis-à-vis d'une partie correspondante de la masse sismique 51 et qui constitue une autre électrode de condensateur. Les électrodes 54 et 55 sont réparées du substrat 50 par une couche isolante 56, par exemple une couche de silice.

Comme pour la variante précédente, les électrodes d'excitation 54 permettent d'appliquer un signal d'excitation selon les voies $\vec{x}$ et $\vec{y}$. Les électrodes de détection 55 permettent de recueillir un signal également selon les voies $\vec{x}$ et $\vec{y}$ pour le transmettre à un analyseur qui fournira des informations sur la vitesse de rotation autour de l'axe $\vec{z}$ d'un corps équipé du microgyromètre.

Pour un microgyromètre selon la présente invention, le signal détecté est, pour une même vitesse de rotation faible, environ le double de celui détecté par des microgyromètres vibrants conçus selon l'art antérieur. En outre, l'oscillateur évoluant en régime permanent est capable de répondre instantanément à la sollicitation constituée par une vitesse de rotation.

Il entre dans le cadre de la présente invention d'utiliser d'autres moyens d'excitation que ceux décrits, par exemple des moyens d'excitation piézoélectriques.

**Revendications**

1.  Microgyromètre vibrant comportant une masse sismique (16,51) disposée au-dessus d'une surface d'un substrat (15,50) et rattachée à cette surface par des moyens élastiques (22,25,26,32,35,36,53) agencés pour permettre à la masse sismique (16,51) de se déplacer par rapport au substrat (15,50) selon deux directions $\vec{x}$, $\vec{y}$ orthogonales entre elles et orthogonales à l'axe de mesure du microgyromètre, des moyens d'excitation de la masse sismique (16,51) pour la mettre en vibration; et des moyens de détection de la force de Coriolis s'exerçant sur la masse sismique (16,51), **caractérisé en ce que** les moyens d'excitation permettent d'exciter la masse sismique (16,51) dans lesdites deux directions orthogonales entre elles et **en ce que** les moyens de détection permettent de détecter les composantes de la force de Coriolis également dans lesdites deux directions orthogonales entre elles.

2.  Microgyromètre selon la revendication 1, **caractérisé en ce que** les moyens d'excitation sont des moyens d'excitation électrostatiques.

3.  Microgyromètre selon l'une des revendications 1 ou 2, **caractérisé en ce que** les moyens de détection sont des moyens de détection capacitifs.

4.  Microgyromètre selon l'une quelconque des revendications 1 à 3, **caractérisé en ce que** les moyens élastiques (22,25,26,32,35,36,53) sont conçus de sorte à présenter des raideurs mécaniques identiques dans lesdites deux directions orthogonales entre elles.

5.  Microgyromètre selon la revendication 1, **caractérisé en ce que** la masse sismique (16,51) et les moyens élastiques sont définis par des évidements réalisés dans une plaque disposée parallèlement à ladite surface du substrat et au-dessus de cette surface.

6.  Microgyromètre selon la revendication 5, **caractérisé en ce que** les moyens élastiques sont des lames flexibles.

7.  Microgyromètre selon l'une des revendications 5 ou 6, **caractérisé en ce que** les moyens d'excitation comprennent des condensateurs d'excitation électrostatique, chaque condensateur comprenant une électrode (40,54) solidaire du substrat (15,50) et un moyen formant électrode solidaire de la masse sismique (16, 51).

8.  Microgyromètre selon l'une des revendications 5 ou 6, **caractérisé en ce que** les moyens de détection comprennent des condensateurs, chaque condensateur comprenant une électrode (41,51) solidaire du substrat et un moyen formant électrode solidaire de la masse sismique (16,51).

9. Microgyromètre selon l'une des revendications 7 ou 8, **caractérisé en ce que** le moyen formant électrode est constitué par le matériau de la masse sismique (16,51) qui est un matériau conducteur.

10. Microgyromètre selon l'une quelconque des revendications 7 à 9, **caractérisé en ce que** des électrodes (41) solidaires du substrat (15) sont réparties dans lesdits évidements.

11. Microgyromètre selon la revendication 10, **caractérisé en ce qu'**il est prévu des écrans électrostatiques (42) pour que chaque électrode (41) solidaire du substrat (15) forme un condensateur avec uniquement un moyen formant électrode solidaire de la masse sismique (16) et situé en vis-à-vis.

12. Microgyromètre selon l'une quelconque des revendications précédentes, **caractérisé en ce que** la masse sismique (16) est rattachée au substrat (15) par des points d'ancrage (20,30) situés à l'extérieur de la surface occupée par la masse sismique.

13. Microgyromètre selon l'une quelconque des revendications 1 à 11, **caractérisé en ce que** la masse sismique (51) est rattachée au substrat (50) par un point d'ancrage (52) situé au centre de la surface occupée par la masse sismique.

14. Microgyromètre selon l'une quelconque des revendications précédentes, **caractérisé en ce qu'**il est élaboré à partir d'un substrat (15,50) semiconducteur.


**Patentansprüche**

1. Mikromechanischer Schwingkreisel, eine seismische Masse (16, 51) umfassend, angeordnet über einer Oberfläche eines Substrats (15, 50) und an dieser Oberfläche befestigt durch elastische Einrichtungen (22, 25, 26, 32, 35, 36, 53), so konzipiert, dass sie der seismischen Masse (16, 51) ermöglichen, sich in Bezug auf das Substrat (15, 50) in zwei zueinander rechtwinkligen und zu der Messachse des Schwingkreisels rechtwinkligen Richtungen ($x$, $y$) zu verschieben, sowie Anregungseinrichtungen der seismischen Masse (16, 51) umfassend, um sie in Schwingung zu versetzen, und Einrichtungen zur Detektion der Corioliskraft, die auf die seismische Masse (16, 51) wirkt,
**dadurch gekennzeichnet,**
**dass** die Anregungseinrichtungen ermöglichen, die seismische Masse (16, 51) in den genannten beiden zueinander rechtwinkligen Richtungen anzuregen, und dadurch, dass die Detektionseinrichtungen ermöglichen, die Komponenten der Corioliskraft zu detektieren, ebenfalls in den genannten beiden zueinander senkrechten Richtungen.

2. Mikromechanischer Schwingkreisel nach Anspruch 1, **dadurch gekennzeichnet, dass** die Anregungseinrichtungen elektrostatische Anregungseinrichtungen sind.

3. Mikromechanischer Schwingkreisel nach einem der Ansprüche 1 oder 2, **dadurch gekennzeichnet, dass** die Detektionseinrichtungen kapazitive Detektions-einrichtungen sind.

4. Mikromechanischer Schwingkreisel nach einem der Ansprüche 1 bis 3, **dadurch gekennzeichnet, dass** die elastischen Einrichtungen (22, 25, 26, 32, 35, 36, 53) so konzipiert sind, dass ihre mechanischen Steifigkeiten in den genannten beiden zueinander rechtwinkligen Richtungen identisch sind.

5. Mikromechanischer Schwingkreisel nach Anspruch 1, **dadurch gekennzeichnet, dass** die seismische Masse (16, 51) und die elastischen Einrichtungen durch in einer Platte realisierte Aussparungen definiert sind, die parallel zu der Oberfläche des Substrats und über dieser Oberfläche angeordnet ist.

6. Mikromechanischer Schwingkreisel nach Anspruch 5, **dadurch gekennzeichnet, dass** die elastischen Einrichtungen flexible Lamellen bzw. Plättchen sind.

7. Mikromechanischer Schwingkreisel nach einem der Ansprüche 5 oder 6, **dadurch gekennzeichnet, dass** die Anregungseinrichtungen elektrostatische Anregungskondensatoren umfassen, wobei jeder Kondensator eine fest mit dem Substrat (15, 50) verbundene Elektrode (40, 54) und eine fest mit der seismischen Masse (16, 51) verbundene, Elektrode-bildende Einrichtung umfasst.

**8.** Mikromechanischer Schwingkreisel nach einem der Ansprüche 5 oder 6, **dadurch gekennzeichnet, dass** die Detektionseinrichtungen Kondensatoren umfassen, wobei jeder Kondensator eine fest mit dem Substrat verbundene Elektrode (41, 51) und eine fest mit der seismischen Masse (16, 51) verbundene Elektrode-bildende Einrichtung umfasst.

**9.** Mikromechanischer Schwingkreisel nach einem der Ansprüche 7 oder 8, **dadurch gekennzeichnet, dass** die Elektrode-bildende Einrichtung durch das Material der seismischen Masse (16, 51) gebildet wird, das ein leitfähiges Material ist.

**10.** Mikromechanischer Schwingkreisel nach einem der Ansprüche 7 bis 9, **dadurch gekennzeichnet, dass** die fest mit dem Substrat (15) verbundenen Elektroden (41) in den genannten Aussparungen verteilt sind.

**11.** Mikromechanischer Schwingkreisel nach Anspruch 10, **dadurch gekennzeichnet, dass** elektrostatische Abschirmungen (42) vorgesehen sind, so dass jede fest mit dem Substrat (15) verbundene Elektrode (41) mit nur einer ihr gegenüberstehenden, fest mit der seismischen Masse (16) verbundenen Elektrodebildenden Einrichtung einen Kondensator bildet.

**12.** Mikromechanischer Schwingkreisel nach einem der vorangehenden Ansprüche, **dadurch gekennzeichnet, dass** die seismische Masse (16) an dem Substrat (15) durch Verankerungspunkte (20, 30) befestigt ist, die sich außerhalb der von der seismischen Masse eingenommenen Fläche befinden.

**13.** Mikromechanischer Schwingkreisel nach einem der Ansprüche 1 bis 11, **dadurch gekennzeichnet, dass** die seismische Masse (51) an dem Substrat (50) durch einen Verankerungspunkt (52) befestigt ist, der sich im Zentrum der durch die seismische Masse eingenommenen Fläche befindet.

**14.** Mikromechanischer Schwingkreisel nach einem der vorangehenden Ansprüche, **dadurch gekennzeichnet, dass** er hergestellt wird durch Bearbeitung eines Halbleiter-Substrat (15, 50).

**Claims**

**1.** Vibrating microgyrometer having a seismic mass (16, 51) positioned above a surface of a substrate (15, 50) and attached to said surface by elastic means (22, 25, 26, 32, 35, 36, 53), arranged so as to enable the seismic mass (16, 51) to move relative to the substrate (15, 50) in two directions ($\vec{x}, \vec{y}$) orthogonal to one another and orthogonal to the measurement axis of the microgyrometer, excitation means of the seismic mass (16, 51) for vibrating the same and detection means of the Coriolis force exerted on the seismic mass (16, 51), **characterized in that** the excitation means make it possible to excite the seismic mass (16, 51) in said two directions orthogonal to one another and the detection means make it possible to detect the components of the Coriolis force, also in said two directions orthogonal to one another.

**2.** Microgyrometer according to claim 1, **characterized in that** the excitation means are electrostatic excitation means.

**3.** Microgyrometer according to either of the claims 1 and 2, **characterized in that** the detection means are capacitive detection means.

**4.** Microgyrometer according to any one of the claims 1 to 3, **characterized in that** the elastic means (22, 25, 26, 32, 35, 36, 53) are designed so as to have identical mechanical stiffnesses in said two mutually orthogonal directions.

**5.** Microgyrometer according to claim 1, **characterized in that** the seismic mass (16, 51) and elastic means are defined by recesses made in a plate positioned parallel to said surface of the substrate and above said surface.

**6.** Microgyrometer according to claim 5, **characterized in that** the elastic means are flexible means.

**7.** Microgyrometer according to either of the claims 5 and 6, **characterized in that** the excitation means comprise electrostatic excitation capacitors, each capacitor having an electrode (40, 54) integral with the substrate (15, 50) and a means forming an electrode integral with the seismic mass (16, 51).

8. Microgyrometer according to either of the claims 5 and 6, **characterized in that** the detection means comprise capacitors, each capacitor comprising an electrode (41, 51) integral with the substrate and a means forming an electrode integral with the seismic mass (16, 51).

9. Microgyrometer according to either of the claims 7 and 8, **characterized in that** the means forming the electrode is constituted by the material of the seismic mass (16, 51), which is a conductive material.

10. Microgyrometer according to any one of the claims 7 to 9, **characterized in that** the electrodes (41) integral with the substrate (15) are distributed in said recesses.

11. Microgyrometer according to claim 10, **characterized in that** there are electrostatic screens (42), so that each electrode (41) integral with the substrate (15) forms a capacitor with solely one means forming an electrode integral with the seismic mass (16) and facing the same.

12. Microgyrometer according to any one of the preceding claims, **characterized in that** the seismic mass (16) is attached to the substrate (15) by anchoring points (20, 30) located outside the surface occupied by the seismic mass.

13. Microgyrometer according to any one of the claims 1 to 11, **characterized in that** the seismic mass (51) is attached to the substrate (15) by an anchoring point (52) located in the centre of the surface occupied by the seismic mass.

14. Microgyrometer according to any one of the preceding claims, **characterized in that** it is produced from a semi-conductor substrate (15, 50).

FIG. 1

FIG. 2

EP 0 915 323 B1

FIG. 3

FIG. 4

12